# EUROPEAN PATENT SPECIFICATION

(11) **EP 4 155 343 B1**
(45) Date of publication and mention of the grant of the patent: **22.07.2026**
(21) Application number: 21808570.2
(22) Date of filing: 05.04.2021
(51) Int. Cl.: C08K 5/06, C08L 23/34, C08K 5/39, C09D 123/34

(54) **LATEX COMPOSITION**
LATEXZUSAMMENSETZUNG
COMPOSITION DE LATEX

(30) Priority: 19.05.2020 JP 2020087238
(43) Date of publication of application: 29.03.2023
(73) Proprietor: Sumitomo Seika Chemicals Co., Ltd., Kako-gun, Hyogo 675-0145 (JP)
(72) Inventor: SAWADA, Kohei, Himeji-shi, Hyogo 672-8076 (JP)
(74) Representative: Vossius & Partner Patentanwälte Rechtsanwälte mbB
(86) International application number: PCT/JP2021/014455
(87) International publication number: WO 2021/235119

(56) References cited:
- WO-A1-2012/141020
- JP-A- 2007 224 244
- JP-A- 2009 029 644
- JP-A- 2011 032 590
- JP-A- 2019 099 799
- JP-A- H0 374 451
- JP-B2- 5 816 397
- US-A- 2 968 637

## Description

### Technical Field

The present disclosure relates to a latex composition, and more specifically relates to a chlorosulfonated polyethylene latex composition.

### Background Art

Chlorosulfonated polyethylene produced by chlorination and chlorosulfonation of polyethylene has excellent weather resistance, ozone resistance, flame resistance, oil resistance, mechanical strength, brightness, and the like, and is used for automotive hoses, gas hoses, industrial hoses, electrical wire coatings, coated fabrics, packing seals, gaskets, rolls, linings, and other industrial parts, rubber boats, life jackets, windbreakers, escalator handrails, adhesives, outdoor coatings, rubber gloves, and the like.

For use in the above applications, for example, chlorosulfonated polyethylene is blended with various additives with a kneading machine, followed by extrusion or press molding to produce articles. More specifically, for example, Example 1 of Patent Literature (PTL) 1 discloses producing a chlorosulfonated polyethylene composition having a tensile strength of 246 kg/cm² (approximately equal to 24 MPa).

Typically known molding and processing methods for polymers, such as chlorosulfonated polyethylene, include extrusion molding and press molding. However, when producing thin film articles, such as outdoor coatings and rubber gloves mentioned above, extrusion or press molding may not be suitable due to, for example, the complexity of the shape of the molded article or the work environment. In such cases, the thin film articles etc. can be produced by thinly applying and drying latex in which fine particles of chlorosulfonated polyethylene are dispersed in an aqueous medium (chlorosulfonated polyethylene latex). For example, PTL 2 discloses chlorosulfonated polyethylene latex produced by using a specific emulsifier.

### Citation List

### Patent Literature

PTL 1: JPH03-74451A
PTL 2: WO2012/141020

### Summary of Invention

### Technical Problem

The present inventor conducted research on methods for producing a thin film article by thinly applying and drying chlorosulfonated polyethylene latex, and found that uniform thin films would be unlikely to be obtained due to, for example, the formation of cracks in the thin film during the step of drying chlorosulfonated polyethylene latex, and that produced thin film articles would have strength lower than that of the original chlorosulfonated polyethylene. To address these problems, the inventor conducted further research for the purpose of providing chlorosulfonated polyethylene latex having excellent film-forming properties, and providing a thin film article that is produced by using the chlorosulfonated polyethylene latex and that has excellent tensile strength.

### Solution to Problem

The present inventor conducted further research and consequently found that blending chlorosulfonated polyethylene latex with a vulcanization accelerator and a glycol ether would suppress the formation of cracks in the thin film during the step of drying chlorosulfonated polyethylene latex, thus achieving improved film-forming properties. The inventor also found that molded products produced accordingly would have a tensile strength that greatly exceeds the tensile strength of the original chlorosulfonated polyethylene (e.g., 24 MPa as disclosed in Example 1 of PTL 1).

The present invention is as set out in the appended claims.

### Advantageous Effects of Invention

Provided is a chlorosulfonated polyethylene latex composition that has excellent film-forming properties and that comprises chlorosulfonated polyethylene latex, a vulcanization accelerator, and a glycol ether. Molded articles produced from the composition have particularly excellent tensile strength. More specifically, molded articles produced from the composition can have a tensile strength that greatly exceeds the tensile strength of the original chlorosulfonated polyethylene (e.g., 24 MPa as disclosed in Example 1 of PTL 1). Vulcanization accelerators are a component that promotes vulcanization but does not increase the amount of vulcanization; thus, it seems less likely that vulcanization accelerators improve tensile strength. It also seems less likely that glycol ethers contribute to tensile strength. Accordingly, it is surprising that a molded article obtained from the chlorosulfonated polyethylene latex composition comprising a combination of these components has significantly improved tensile strength.

### Description of Embodiments

Embodiments encompassed by the present disclosure are described in more detail below. The present disclosure preferably encompasses, for example, a chlorosulfonated polyethylene latex composition comprising specific components, and its applications; however, the present disclosure is not limited to these and encompasses everything disclosed herein and recognizable to those skilled in the art.

The chlorosulfonated polyethylene latex composition encompassed by the present disclosure comprises (A) chlorosulfonated polyethylene, (B) a vulcanization accelerator, and (C) a glycol ether. As used herein, the chlorosulfonated polyethylene latex composition encompassed by the present disclosure may be referred to as "the composition of the present disclosure." Further, the chlorosulfonated polyethylene, vulcanization accelerator, and glycol ether may be referred to as "component (A)," "component (B)," and "component (C)," respectively.

Chlorosulfonated polyethylene is produced by chlorination and chlorosulfonation of polyethylene. In other words, chlorosulfonated polyethylene is referred to as "chlorinated and chlorosulfonated polyethylene." Although no structural limitation is intended, chlorosulfonated polyethylene may be represented by, for example, the following structural formula. (This structural formula is used only for convenience to facilitate understanding. For example, the continuity of each repeating unit (i.e., whether the repeating units are continuously or randomly linked) is not specified.)

### - (CH₂-CH₂)ₗ-(CH₂-CH(SO₂Cl))ₘ-(CH₂-CH(Cl))ₙ-

For example, component (A) is not limited and is preferably chlorosulfonated polyethylene obtained by introducing about 20 to 45 parts by mass of chlorine and about 0.1 to 5 parts by mass of sulfur, per 100 parts by mass of polyethylene.

The upper or lower limit of the amount range of chlorine (20 to 45 parts by mass) may be, for example, 21, 22, 23, 24, 25, 26, 27, 28, 29, 30, 31, 32, 33, 34, 35, 36, 37, 38, 39, 40, 41, 42, 43, or 44 parts by mass. For example, this range may be 21 to 44 parts by mass. The upper or lower limit of the amount range of sulfur (0.1 to 5 parts by mass) may be, for example, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, or 4.9 parts by mass. For example, this range may be 0.2 to 4 parts by mass.

Also, without such a limitation, chlorosulfonated polyethylene has both elastomer characteristics and vulcanization characteristics, and contains no double bonds in the main chain, according to the classification of the standard of the American Society for Testing and Materials (ASTM D1418). Therefore, chlorosulfonated polyethylene has excellent chemical resistance, weather resistance, ozone resistance, heat resistance, and the like.

The composition of the present disclosure is a chlorosulfonated polyethylene latex composition, and chlorosulfonated polyethylene latex is latex in which chlorosulfonated polyethylene is dispersed in water to form a colloidal state (for example, by optionally using an emulsifier). The concentration of the chlorosulfonated polyethylene latex in the composition of the present disclosure is preferably, for example, 30 to 60 mass%. The upper or lower limit of this range may be, for example, 31, 32, 33, 34, 35, 36, 37, 38, 39, 40, 41, 42, 43, 44, 45, 46, 47, 48, 49, 50, 51, 52, 53, 54, 55, 56, 57, 58, or 59 mass%. For example, this range may be 35 to 55 mass%.

The chlorosulfonated polyethylene latex for use in the composition of the present disclosure is not limited and may be those produced by known methods (see, for example, PTL 2) or may be purchased commercial products. Examples of the known methods include a method comprising stirring an organic solvent solution of chlorosulfonated polyethylene synthesized by chlorosulfonation of high-pressure-processed polyethylene with chlorine and sulfurous acid gas, and an aqueous surfactant solution with a high-pressure homogenizer or other mixer to produce an emulsion, and subjecting the resulting emulsion to solvent removal and concentration. Examples of the commercial products include Sepolex CSM produced by Sumitomo Seika Chemicals Co., Ltd.

Examples of vulcanization accelerators contained in the composition of the present disclosure include, but are not limited to, aldehyde-ammonia-based vulcanization accelerators, aldehyde-amine-based vulcanization accelerators, thiourea-based vulcanization accelerators, guanidine-based vulcanization accelerators, thiazole-based vulcanization accelerators, sulfenamide-based vulcanization accelerators, thiuram-based vulcanization accelerators, dithiocarbamate-based vulcanization accelerators, and xanthate-based vulcanization accelerators.

Examples of aldehyde-ammonia-based vulcanization accelerators include hexamethylenetetramine.

Examples of aldehyde-amine-based vulcanization accelerators include n-butyraldehyde aniline.

Examples of thiourea-based vulcanization accelerators include N,N'-diphenylthiourea, trimethylthiourea, N,N'-diethylthiourea, and N,N'-dibutylthiourea.

Examples of guanidine-based vulcanization accelerators include 1,3-diphenylguanidine, di-o-tolylguanidine, 1-o-tolylbiguanide, and a di-o-tolylguanidine salt of dicatecholborate.

Examples of thiazole-based vulcanization accelerators include 2-mercaptobenzothiazole, dibenzothiazyl disulfide, a zinc salt of 2-mercaptobenzothiazole, a cyclohexylamine salt of 2-mercaptobenzothiazole, a dicyclohexylamine salt of 2-mercaptobenzothiazole, 2-(N,N-diethylthiocarbamoylthio)benzothiazole, and 2-(4'-morpholinodithio)benzothiazole.

Examples of sulfenamide-based vulcanization accelerators include N-cyclohexyl-2-benzothiazolylsulfenamide, N-tert-butyl-2-benzothiazolylsulfenamide, N-oxydiethylene-2-benzothiazolylsulfenamide, and N,N-dicyclohexyl-2 benzothiazolylsulfenamide.

Examples of thiuram-based vulcanization accelerators include tetramethylthiuram disulfide, tetraethylthiuram disulfide, tetrabutylthiuram disulfide, tetrakis(2-ethylhexyl)thiuram disulfide, tetrabenzylthiuram disulfide, tetramethylthiuram monosulfide, and dipentamethylenethiuram tetrasulfide.

Examples of dithiocarbamate-based vulcanization accelerators include a pentamethylene dithiocarbamate piperidine salt, a pipecolyl dithiocarbamate pipecoline salt, zinc dimethyldithiocarbamate, zinc diethyldithiocarbamate, zinc dibutyldithiocarbamate, zinc N-ethyl-N-phenyldithiocarbamate, zinc N-pentamethylenedithiocarbamate, zinc dibenzyldithiocarbamate, sodium diethyldithiocarbamate, sodium dibutyldithiocarbamate, copper dimethyldithiocarbamate, ferric dimethyldithiocarbamate, and tellurium diethyldithiocarbamate.

Examples of xanthate-based vulcanization accelerators include zinc butyl xanthate and zinc isopropyl xanthate.

The vulcanization accelerators may be used alone or in a combination of two or more.

Examples of a method for incorporating the vulcanization accelerator into the composition of the present disclosure include a method comprising blending the vulcanization accelerator with chlorosulfonated polyethylene latex. The blending method is not limited. For example, the vulcanization accelerator may be blended directly. Alternatively, a vulcanization accelerator formed into an aqueous solution or aqueous dispersion may be blended.

The content of the vulcanization accelerator in the composition of the present disclosure is preferably 0.1 to 10 parts by mass, and more preferably 1 to 5 parts by mass, per 100 parts by mass of chlorosulfonated polyethylene in the composition. The upper or lower limit of this range (0.1 to 10 parts by mass) may be, for example, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2 .7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, 5.5, 6, 6.5, 7, 7.5, 8, 8.5, 9, or 9.5 parts by mass. For example, the range may be 0.5 to 7.5 parts by mass.

Examples of the glycol ether contained in the composition of the present disclosure include, but are not limited to, methyl glycol, methyl diglycol, methyl triglycol, methyl polyglycol, isopropyl glycol, isopropyl diglycol, butyl glycol, butyl diglycol, butyl triglycol, isobutyl glycol, isobutyl diglycol, hexyl glycol, hexyl diglycol, 2-ethylhexyl glycol, 2-ethylhexyl diglycol, allyl glycol, phenyl glycol, phenyl diglycol, benzyl glycol, benzyl diglycol, methyl propylene glycol, methyl propylene diglycol, methyl propylene triglycol, propyl propylene glycol, propyl propylene diglycol, butyl propylene diglycol, butyl propylene triglycol, phenyl propylene glycol, methyl propylene glycol acetate, dimethyl glycol, dimethyl diglycol, dimethyl triglycol, methyl ethyl diglycol, diethyl diglycol, dibutyl diglycol, and dimethyl propylene diglycol. Of these, phenyl glycol, butyl triglycol, phenyl diglycol, methyl propylene triglycol, and the like are preferred. The glycol ethers may be used alone or in a combination of two or more.

The glycol ether contained in the composition of the present disclosure is preferably, for example, a compound represented by formula (I): R¹-(O-CH₂-CH(R²))ₙ-OH (I), wherein R¹ is a linear or branched alkyl group having 1, 2, 3, 4, 5, or 6 carbon atoms or a phenyl group, R² is a hydrogen atom or a linear or branched alkyl group having 1, 2, or 3 carbon atoms, and n is 1, 2, 3, 4, 5, or 6.

Examples of a method for incorporating the glycol ether into the composition of the present disclosure include a method comprising blending the glycol ether with chlorosulfonated polyethylene latex. The blending method is not limited. For example, the glycol ether may be blended directly. Alternatively, glycol ether formed into an aqueous solution or aqueous dispersion may be blended.

The content of the glycol ether in the composition of the present disclosure is preferably 1 to 30 parts by mass, and more preferably 5 to 20 parts by mass, per 100 parts by mass of chlorosulfonated polyethylene in the composition. The upper or lower limit of this range (1 to 30 parts by mass) may be, for example, 2, 3, 4, 5, 6, 7, 8, 9, 10, 11, 12, 13, 14, 15, 16, 17, 18, 19, 20, 21, 22, 23, 24, 25, 26, 27, 28, or 29 parts by mass. For example, the range may be 2 to 29 parts by mass.

The composition of the present disclosure is a chlorosulfonated polyethylene latex composition, and is a composition in which fine particles of chlorosulfonated polyethylene are dispersed in an aqueous medium, as described above. The composition of the present disclosure thus also comprises an aqueous medium. The aqueous medium for use is preferably water and may be various types of water, such as tap water, industrial water, ion-exchanged water, deionized water, and pure water. Particularly preferred is deionized water or pure water.

In addition to components (A) to (C), the composition of the present disclosure may also comprise additional components as long as the above effects are not impaired. Examples of such components include thickeners, tackifiers, pH adjusters, plasticizers, film-forming aids, crosslinking agents, crosslinking aids, fillers, anti-aging agents, metal oxides, defoamers, and stabilizers. Surfactants (emulsifiers) may also be contained to aid dispersion. Latex other than chlorosulfonated polyethylene latex may also be contained. Examples of such latex include butadiene latex, butadiene-styrene copolymer latex, dicarboxylated butadiene-styrene copolymer latex, vinylpyridine-butadiene-styrene terpolymer latex, isoprene rubber latex, acrylonitrile-butadiene copolymer latex, hydrogenated acrylonitrile-butadiene copolymer latex, and polyolefin emulsion. The latex other than chlorosulfonated polyethylene latex may be used alone or in a combination of two or more.

Examples of methods for producing the composition of the present disclosure include a method comprising preparing chlorosulfonated polyethylene latex by a known method or a method obvious from a known method, and adding component (B) and component (C) (and optionally other components) thereto, followed by mixing. These components may be mixed in advance before being added or may be added individually in sequence to the chlorosulfonated polyethylene latex. These components may be added directly, or aqueous solutions or aqueous dispersions of these components may be prepared in advance and added.

By using the composition of the present disclosure, a molded product, such as a thin film article, can be formed by, for example, applying the composition of the present disclosure to the surface of a target coating object or the surface of a mold for a molded product, followed by drying.

The materials and shapes of the target coating object and the mold for a molded product in terms of the composition of the present disclosure are not limited. Examples of the materials include paper, glass, wood, various metals, cement, resins, and rubbers. Examples of the shapes include flat plates, spheres, human handprints, fibers, and woven fabrics.

The method for applying the composition of the present disclosure to the surface of a target coating object or the surface of a mold for a molded product is not limited. Examples include brush coating, spraying, bar coating, and dipping.

The drying method after the composition of the present disclosure is applied to the surface of a target coating object or the surface of a mold for a molded product is not limited. Examples include natural drying at room temperature, air drying, drying by heating, drying under reduced pressure, and freeze drying. From the standpoint of workability and time required for drying, drying by heating is preferred.

The temperature for drying by heating of the composition of the present disclosure is not limited as long as the water in the chlorosulfonated polyethylene latex contained in the chlorosulfonated polyethylene latex composition is volatilized. From the standpoint of workability and time required for drying, the temperature is preferably, for example, 20 to 200°C, and more preferably 70 to 150°C. The temperature for drying by heating may be constant or may be changed during the drying process. Alternatively, the drying may be performed while changing the drying temperature.

The time for drying by heating the composition of the present disclosure is not limited as long as the water in the chlorosulfonated polyethylene latex contained in the chlorosulfonated polyethylene latex composition is volatilized. From the standpoint of workability and the time required for drying, the time is preferably 5 minutes to 24 hours, and more preferably 1 hour to 12 hours.

Additionally, for example, a molded product of a second layer may be provided on the molded product of the first layer formed by the method described above.

The composition of the present disclosure is particularly suitable for, for example, paints and outdoor coatings, and for preparing thin film articles.

The term "comprise" or "contain" as used herein includes the meanings of consisting essentially of and consisting of. Further, the present disclosure includes any combination of the constituent requirements described in the present specification.

In addition, the various characteristics (properties, structures, functions, etc.) described in each embodiment of the present disclosure described above may be combined in any way in specifying the subjects encompassed by the present disclosure. In other words, the present disclosure encompasses all the subjects comprising all combinations of the combinable characteristics described in the present specification.

### Examples

The embodiments of the present disclosure are more specifically explained below with reference to Examples; however, the embodiments are not limited to the Examples below.

### Evaluation Method

Each measurement was performed according to the following methods.

### (1) Film-forming Properties

Chlorosulfonated polyethylene latex compositions were produced under the conditions described in each Example and each Comparative Example, and molded articles were formed according to the following process. The thus-obtained molded articles were visually observed to evaluate the film-forming properties. Specifically, a molded article without cracking was determined to be "A" while a molded article with cracking was determined to be "B."

A glass container (length: 14 cm × width: 14 cm × height: 2 cm) was placed horizontally in an oven (model: PVH-231, produced by ESPEC Corp.), and 20 g of the chlorosulfonated polyethylene latex composition was gently poured into the glass container.

The internal temperature of the oven was set to 70°C, and the product was dried by heating for 5 hours. Further, the internal temperature of the oven was changed to 120°C, and the product was dried by heating for 2 hours.

The glass container was removed from the oven and allowed to cool to room temperature to thus obtain a molded article of the chlorosulfonated polyethylene latex composition.

### (2) Tensile Strength of Molded Article

Chlorosulfonated polyethylene latex compositions were produced under the conditions described in each Example and each Comparative Example, and molded articles of the compositions were formed in the same manner as described in "(1) Film-forming Properties" above. The tensile strength of the molded articles was then measured. The tensile strength of the molded articles was measured in accordance with JIS K6251:2010. Specifically, the obtained molded article was punched into a No. 4 dumbbell shape, and the measurement was performed using a tensile tester (Autograph AGS-X, 10 kN, produced by Shimadzu Corporation) at a tensile rate of 200 mm/min. Molded articles preferably have a tensile strength measured in this manner of about 30 to 40 MPa.

### Example 1

A chlorosulfonated polyethylene latex composition was obtained by adding 0.8 g of a 50% aqueous solution of sodium dibutyldithiocarbamate (trade name: Nocceler TP, produced by Ouchi Shinko Chemical Industrial Co., Ltd.) as a vulcanization accelerator (1 part by mass per 100 parts by mass of the solids content of chlorosulfonated polyethylene latex), and 2.0 g of phenyl glycol as a glycol ether (5 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.).

### Example 2

A chlorosulfonated polyethylene latex composition was obtained by adding 2.4 g of a 50% aqueous solution of sodium dibutyldithiocarbamate (trade name: Nocceler TP, produced by Ouchi Shinko Chemical Industrial Co., Ltd.) as a vulcanization accelerator (3 parts by mass per 100 parts by mass of the solids content of chlorosulfonated polyethylene latex), and 2.0 g of phenyl glycol as a glycol ether (5 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.).

### Example 3

A chlorosulfonated polyethylene latex composition was obtained by adding 0.8 g of a 50% aqueous solution of sodium dibutyldithiocarbamate (trade name: Nocceler TP, produced by Ouchi Shinko Chemical Industrial Co., Ltd.) as a vulcanization accelerator (1 part by mass per 100 parts by mass of the solids content of chlorosulfonated polyethylene latex), and 4.0 g of phenyl glycol as a glycol ether (10 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.).

### Example 4

A chlorosulfonated polyethylene latex composition was obtained by adding 2.4 g of a 50% aqueous solution of sodium dibutyldithiocarbamate (trade name: Nocceler TP, produced by Ouchi Shinko Chemical Industrial Co., Ltd.) as a vulcanization accelerator (3 parts by mass per 100 parts by mass of the solids content of chlorosulfonated polyethylene latex), and 4.0 g of phenyl glycol as a glycol ether (10 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.).

### Example 5

A chlorosulfonated polyethylene latex composition was obtained by adding 4.0 g of a 50% aqueous solution of sodium dibutyldithiocarbamate (trade name: Nocceler TP, produced by Ouchi Shinko Chemical Industrial Co., Ltd.) as a vulcanization accelerator (5 parts by mass per 100 parts by mass of the solids content of chlorosulfonated polyethylene latex), and 4.0 g of phenyl glycol as a glycol ether (10 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.).

### Example 6

A chlorosulfonated polyethylene latex composition was obtained by adding 2.4 g of a 50% aqueous solution of sodium dibutyldithiocarbamate (trade name: Nocceler TP, produced by Ouchi Shinko Chemical Industrial Co., Ltd.) as a vulcanization accelerator (3 parts by mass per 100 parts by mass of the solids content of chlorosulfonated polyethylene latex), and 4.0 g of butyl triglycol as a glycol ether (10 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.).

### Example 7

A chlorosulfonated polyethylene latex composition was obtained by adding 2.4 g of a 50% aqueous solution of sodium dibutyldithiocarbamate (trade name: Nocceler TP, produced by Ouchi Shinko Chemical Industrial Co., Ltd.) as a vulcanization accelerator (3 parts by mass per 100 parts by mass of the solids content of chlorosulfonated polyethylene latex), and 4.0 g of phenyl diglycol as a glycol ether (10 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.).

### Example 8

A chlorosulfonated polyethylene latex composition was obtained by adding 2.4 g of a 50% aqueous solution of sodium dibutyldithiocarbamate (trade name: Nocceler TP, produced by Ouchi Shinko Chemical Industrial Co., Ltd.) as a vulcanization accelerator (3 parts by mass per 100 parts by mass of the solids content of chlorosulfonated polyethylene latex), and 4.0 g of methyl propylene triglycol as a glycol ether (10 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.).

### Example 9

A chlorosulfonated polyethylene latex composition was obtained by adding 2.4 g of a 50% aqueous solution of sodium dibutyldithiocarbamate (trade name: Nocceler TP, produced by Ouchi Shinko Chemical Industrial Co., Ltd.) as a vulcanization accelerator (3 parts by mass per 100 parts by mass of the solids content of chlorosulfonated polyethylene latex), and 6.0 g of butyl triglycol as a glycol ether (15 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.).

### Example 10

A chlorosulfonated polyethylene latex composition was obtained by adding 2.4 g of a 50% aqueous solution of sodium dibutyldithiocarbamate (trade name: Nocceler TP, produced by Ouchi Shinko Chemical Industrial Co., Ltd.) as a vulcanization accelerator (3 parts by mass per 100 parts by mass of the solids content of chlorosulfonated polyethylene latex), and 8.0 g of butyl triglycol as a glycol ether (20 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.).

### Example 11

A chlorosulfonated polyethylene latex composition was obtained by adding 1.2 g of zinc N-ethyl-N-phenyldithiocarbamate (trade name: Nocceler PX, produced by Ouchi Shinko Chemical Industrial Co., Ltd.) as a vulcanization accelerator (3 parts by mass per 100 parts by mass of the solids content of chlorosulfonated polyethylene latex), and 4.0 g of butyl triglycol as a glycol ether (10 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.).

### Example 12

A chlorosulfonated polyethylene latex composition was obtained by adding 1.2 g of dipentamethylenethiuram tetrasulfide (trade name: Nocceler TRA, produced by Ouchi Shinko Chemical Industrial Co., Ltd.) as a vulcanization accelerator (3 parts by mass per 100 parts by mass of the solids content of chlorosulfonated polyethylene latex), and 4.0 g of butyl triglycol as a glycol ether (10 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.).

### Example 13

A chlorosulfonated polyethylene latex composition was obtained by adding 1.2 g of a zinc salt of 2-mercaptobenzothiazole (trade name: Nocceler MZ, produced by Ouchi Shinko Chemical Industrial Co., Ltd.) as a vulcanization accelerator (3 parts by mass per 100 parts by mass of the solids content of chlorosulfonated polyethylene latex), and 4.0 g of butyl triglycol as a glycol ether (10 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.).

### Comparative Example 1

A chlorosulfonated polyethylene latex composition was obtained without adding anything to 100 g of chlorosulfonated polyethylene latex with a solids content of 40% (trade name: Sepolex CSM, produced by Sumitomo Seika Chemicals Co., Ltd.).

### Comparative Example 2

A chlorosulfonated polyethylene latex composition was obtained by adding 2.4 g of a 50% aqueous solution of sodium dibutyldithiocarbamate (trade name: Nocceler TP, produced by Ouchi Shinko Chemical Industrial Co., Ltd.) as a vulcanization accelerator (3 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.), without adding any glycol ether.

### Comparative Example 3

A chlorosulfonated polyethylene latex composition was obtained by adding 4.0 g of butyl triglycol as a glycol ether (10 parts by mass per 100 parts by mass of the solids content of chlorosulfonated polyethylene latex) to 100 g of chlorosulfonated polyethylene latex with a solids content of 40% (trade name: Sepolex CSM, produced by Sumitomo Seika Chemicals Co., Ltd.), without adding any vulcanization accelerator.

Table 1 below shows the film-forming properties of the chlorosulfonated polyethylene compositions obtained in the Examples and Comparative Examples, and the tensile strength of the molded articles obtained from these compositions.

**Table 1**

| | Vulcanization accelerator | Glycol ether | Film-forming properties | Tensile strength (MPa) |
|---|---|---|---|---|
| Ex. 1 | Nocceler TP | Phenyl glycol | A | 31.3 |
| | 1 part by mass | 5 parts by mass | | |
| Ex. 2 | Nocceler TP | Phenyl glycol | A | 31.5 |
| | 3 parts by mass | 5 parts by mass | | |
| Ex. 3 | Nocceler TP | Phenyl glycol | A | 32.6 |
| | 1 part by mass | 10 parts by mass | | |
| Ex. 4 | Nocceler TP | Phenyl glycol | A | 40.0 |
| | 3 parts by mass | 10 parts by mass | | |
| Ex. 5 | Nocceler TP | Phenyl glycol | A | 35.1 |
| | 5 parts by mass | 10 parts by mass | | |
| Ex. 6 | Nocceler TP | Butyl triglycol | A | 40.5 |
| | 3 parts by mass | 10 parts by mass | | |
| Ex. 7 | Nocceler TP | Phenyl diglycol | A | 38.6 |
| | 3 parts by mass | 10 parts by mass | | |
| Ex. 8 | Nocceler TP | Methyl propylene triglycol | A | 35.0 |
| | 3 parts by mass | 10 parts by mass | | |
| Ex. 9 | Nocceler TP | Butyl triglycol | A | 37.5 |
| | 3 parts by mass | 15 parts by mass | | |
| Ex. 10 | Nocceler TP | Butyl triglycol | A | 38.0 |
| | 3 parts by mass | 20 parts by mass | | |
| Ex. 11 | Nocceler PX | Butyl triglycol | A | 32.2 |
| | 3 parts by mass | 10 parts by mass | | |
| Ex. 12 | Nocceler TRA | Butyl triglycol | A | 31.1 |
| | 3 parts by mass | 10 parts by mass | | |
| Ex. 13 | Nocceler MZ | Butyl triglycol | A | 33.2 |
| | 3 parts by mass | 10 parts by mass | | |
| Comp. Ex. 1 | None | None | B | 22.3 |
| Comp. Ex. 2 | Nocceler TP | None | A | 23.7 |
| | 3 parts by mass | | | |
| Comp. Ex. 3 | None | Butyl triglycol | A | 24.2 |
| | | 10 parts by mass | | |

| | | | | |
|---|---|---|---|---|
| Nocceler TP (dithiocarbamate-based): sodium dibutyldithiocarbamate Nocceler PX (dithiocarbamate-based): zinc N-ethyl-N-phenyldithiocarbamate Nocceler TRA (thiuram-based): dipentamethylenethiuram tetrasulfide Nocceler MZ (thiazole-based): zinc salt of 2-mercaptobenzothiazole | | | | |

As shown in Table 1, the chlorosulfonated polyethylene latex compositions obtained in the Examples had excellent film-forming properties, and the molded articles obtained using these compositions had remarkably improved tensile strength. In contrast, although some of the chlorosulfonated polyethylene latex compositions obtained in the Comparative Examples had improved film-forming properties, the molded articles obtained using these compositions did not have improved tensile strength.

The above results demonstrate that the chlorosulfonated polyethylene latex compositions comprising chlorosulfonated polyethylene latex, a vulcanization accelerator, and a glycol ether have excellent film-forming properties, and that the molded products produced by using these chlorosulfonated polyethylene latex compositions have a tensile strength that greatly exceeds the tensile strength of the original chlorosulfonated polyethylene (e.g., 24 MPa as disclosed in Example 1 of PTL 1).

## Claims

1. A chlorosulfonated polyethylene latex composition comprising
(A) chlorosulfonated polyethylene,
(B) a vulcanization accelerator, and
(C) a glycol ether.

2. The composition according to claim 1, wherein (B) is at least one member selected from the group consisting of aldehyde-ammonia-based vulcanization accelerators, aldehyde-amine-based vulcanization accelerators, thiourea-based vulcanization accelerators, guanidine-based vulcanization accelerators, thiazole-based vulcanization accelerators, sulfenamide-based vulcanization accelerators, thiuram-based vulcanization accelerators, dithiocarbamate-based vulcanization accelerators, and xanthate-based vulcanization accelerators.

3. The composition according to claim 1 or 2, wherein (C) is a compound represented by formula (I):
R¹-(O-CH₂-CH(R²))ₙ-OH (I),
wherein R¹ is a linear or branched alkyl group having 1, 2, 3, 4, 5, or 6 carbon atoms or a phenyl group, R² is a hydrogen atom or a linear or branched alkyl group having 1, 2, or 3 carbon atoms, and n is 1, 2, 3, 4, 5, or 6.

4. The composition according to claim 1 or 2, wherein (C) is at least one member selected from the group consisting of methyl glycol, methyl diglycol, methyl triglycol, methyl polyglycol, isopropyl glycol, isopropyl diglycol, butyl glycol, butyl diglycol, butyl triglycol, isobutyl glycol, isobutyl diglycol, hexyl glycol, hexyl diglycol, 2-ethylhexyl glycol, 2-ethylhexyl diglycol, allyl glycol, phenyl glycol, phenyl diglycol, benzyl glycol, benzyl diglycol, methyl propylene glycol, methyl propylene diglycol, methyl propylene triglycol, propyl propylene glycol, propyl propylene diglycol, butyl propylene diglycol, butyl propylene triglycol, phenyl propylene glycol, methyl propylene glycol acetate, dimethyl glycol, dimethyl diglycol, dimethyl triglycol, methyl ethyl diglycol, diethyl diglycol, dibutyl diglycol, and dimethyl propylene diglycol.

5. The composition according to any one of claims 1 to 4, wherein (B) is contained in an amount of 0.1 to 10 parts by mass per 100 parts by mass of (A).

6. The composition according to any one of claims 1 to 5, wherein (C) is contained in an amount of 1 to 30 parts by mass per 100 parts by mass of (A).

7. The composition according to claim 1 or 2,
wherein
(B) is contained in an amount of 0.1 to 10 parts by mass per 100 parts by mass of (A), and
(C) is contained in an amount of 1 to 30 parts by mass per 100 parts by mass of (A).

8. A molded product obtained from the composition of any one of claims 1 to 7.

## Patentansprüche

1. Eine chlorsulfonierte Polyethylen-Latex-Zusammensetzung, umfassend
(A) chlorsulfoniertes Polyethylen,
(B) einen Vulkanisationsbeschleuniger und
(C) einen Glykolether.

2. Die Zusammensetzung gemäß Anspruch 1, wobei (B) mindestens ein Element ist, ausgewählt aus der Gruppe bestehend aus Vulkanisationsbeschleunigern auf Aldehyd-Ammoniak-Basis, Vulkanisationsbeschleunigern auf Aldehyd-Amin-Basis, Vulkanisationsbeschleunigern auf Thioharnstoff-Basis, Vulkanisationsbeschleunigern auf Guanidinbasis, Vulkanisationsbeschleunigern auf Thiazolbasis, Vulkanisationsbeschleunigern auf Sulfenamidbasis, Vulkanisationsbeschleunigern auf Thiurambasis, Vulkanisationsbeschleunigern auf Dithiocarbamatbasis und Vulkanisationsbeschleunigern auf Xanthatbasis.

3. Die Zusammensetzung gemäß Anspruch 1 oder 2, wobei (C) eine Verbindung ist, dargestellt durch die Formel (I):
R¹-(O-CH₂-CH(R²))ₙ-OH (I),
wobei R¹ eine lineare oder verzweigte Alkylgruppe mit 1, 2, 3, 4, 5 oder 6 Kohlenstoffatomen oder eine Phenylgruppe ist, R² ein Wasserstoffatom oder eine lineare oder verzweigte Alkylgruppe mit 1, 2 oder 3 Kohlenstoffatomen ist und n 1, 2, 3, 4, 5 oder 6 ist.

4. Die Zusammensetzung gemäß Anspruch 1 oder 2, wobei (C) mindestens ein Element ist, ausgewählt aus der Gruppe bestehend aus Methylglykol, Methyldiglykol, Methyltriglykol, Methylpolyglykol, Isopropylglykol, Isopropyldiglykol, Butylglykol, Butyldiglykol, Butyltriglykol, Isobutylglykol, Isobutyldiglykol, Hexylglykol, Hexyldiglykol, 2-Ethylhexylglykol, 2-Ethylhexyldiglykol, Allylglykol, Phenylglykol, Phenyldiglykol, Benzylglykol, Benzyldiglykol, Methylpropylenglykol, Methylpropylendiglykol, Methylpropylentriglykol, Propylpropylenglykol, Propylpropylendiglykol, Butylpropylendiglykol, Butylpropylentriglykol, Phenylpropylenglykol, Methylpropylenglykolacetat, Dimethylglykol, Dimethyldiglykol, Dimethyltriglykol, Methylethyldiglykol, Diethyldiglykol, Dibutyldiglykol und Dimethylpropylendiglykol.

5. Die Zusammensetzung gemäß einem der Ansprüche 1 bis 4, wobei (B) in einer Menge von 0,1 bis 10 Massenteilen pro 100 Massenteile (A) enthalten ist.

6. Die Zusammensetzung gemäß einem der Ansprüche 1 bis 5, wobei (C) in einer Menge von 1 bis 30 Massenteilen pro 100 Massenteile (A) enthalten ist.

7. Die Zusammensetzung gemäß Anspruch 1 oder 2,
wobei
(B) in einer Menge von 0,1 bis 10 Massenteilen pro 100 Masseteile (A) enthalten ist und
(C) in einer Menge von 1 bis 30 Massenteilen pro 100 Masseteile (A) enthalten ist.

8. Ein Formgegenstand, erhalten aus der Zusammensetzung gemäß einem der Ansprüche 1 bis 7.

## Revendications

1. Composition de latex de polyéthylène chlorosulfoné comprenant
(A) du polyéthylène chlorosulfoné,
(B) un accélérateur de vulcanisation, et
(C) un éther de glycol.

2. Composition selon la revendication 1, dans laquelle (B) est au moins un élément choisi dans le groupe consistant en des accélérateurs de vulcanisation à base d'aldéhyde-ammoniac, des accélérateurs de vulcanisation à base d'aldéhyde-amine, des accélérateurs de vulcanisation à base de thiourée, des accélérateurs de vulcanisation à base de guanidine, des accélérateurs de vulcanisation à base de thiazole, des accélérateurs de vulcanisation à base de sulfénamide, des accélérateurs de vulcanisation à base de thiurame, des accélérateurs de vulcanisation à base de dithiocarbamate, et des accélérateurs de vulcanisation à base de xanthate.

3. Composition selon la revendication 1 ou 2, dans laquelle (C) est un composé représenté par la formule (I) :
R¹-(O-CH₂-CH(R²))ₙ-OH (I),
dans laquelle R¹ est un groupe alkyle linéaire ou ramifié ayant 1, 2, 3, 4, 5 ou 6 atomes de carbone ou un groupe phényl, R² est un atome d'hydrogène ou un groupe alkyle linéaire ou ramifié ayant 1, 2, ou 3 atomes de carbone, et n est 1, 2, 3, 4, 5 ou 6.

4. Composition selon la revendication 1 ou 2, dans laquelle (C) est au moins un élément choisi dans le groupe consistant en méthyl glycol, méthyl diglycol, méthyl triglycol, méthyl polyglycol, isopropyl glycol, isopropyl diglycol, butyl glycol, butyl diglycol, butyl triglycol, isobutyl glycol, isobutyl diglycol, hexyl glycol, hexyl diglycol, 2-éthylhexyl glycol, 2-éthylhexyl diglycol, allyl glycol, phényl glycol, phényl diglycol, benzyl glycol, benzyl diglycol, méthyl propylène glycol, méthyl propylène diglycol, méthyl propylène triglycol, propyl propylène glycol, propyl propylène diglycol, butyl propylène diglycol, butyl propylène triglycol, phényl propylène glycol, acétate de méthyl propylène glycol, diméthyl glycol, diméthyl diglycol, diméthyl triglycol, méthyl éthyl diglycol, diéthyl diglycol, dibutyl diglycol et diméthyl propylène diglycol.

5. Composition selon l'une quelconque des revendications 1 à 4, dans laquelle (B) est contenu en une quantité de 0,1 à 10 parties en masse pour 100 parties en masse de (A).

6. Composition selon l'une quelconque des revendications 1 à 5, dans laquelle (C) est contenu en une quantité de 1 à 30 parties en masse pour 100 parties en masse de (A).

7. Composition selon la revendication 1 ou 2, dans laquelle
(B) est contenu en une quantité de 0,1 à 10 parties en masse pour 100 parties en masse de (A), et
(C) est contenu en une quantité de 1 à 30 parties en masse pour 100 parties en masse de (A).

8. Produit moulé obtenu à partir de la composition selon l'une quelconque des revendications 1 à 7.
